# EUROPEAN PATENT APPLICATION

(11) **EP 3 886 484 A1**
(43) Date of publication of application: **29.09.2021**
(21) Application number: 19896888.5
(22) Date of filing: 11.12.2019
(51) Int. Cl.: H04W 24/10

(54) **MEASUREMENT REPORTING METHOD AND DEVICE**

(30) Priority: 11.12.2018 CN 201811513269
(71) Applicant: Huawei Technologies Co., Ltd., Shenzhen Guangdong 518129 (CN)
(72) Inventor: CHEN, Lei, Shenzhen, Guangdong 518129 (CN); GUAN, Peng, Shenzhen, Guangdong 518129 (CN)
(74) Representative: Pfenning, Meinig & Partner mbB
(86) International application number: PCT/CN2019/124619
(87) International publication number: WO 2020/119727

(57) **Abstract**

This application relates to the field of communications technologies and provides a measurement and reporting method and an apparatus, to resolve a problem that beams from different network nodes may not be simultaneously received because a quantity of beams supported by a terminal in a positioning system is limited. Consequently, when the network nodes send reference signals for positioning, the terminal may not be able to simultaneously receive the reference signals. The foregoing problem can be resolved by using the method provided in this application, and reference signal sending overheads can be reduced. The method includes: A terminal receives reference signals sent by network nodes. The terminal measures the reference signals sent by the network nodes, and obtains measurement results. The terminal sends a measurement result report, where the measurement result report includes at least one group, the group includes the measurement results of the reference signals that can be simultaneously received by the terminal, and the measurement results are obtained by measuring the reference signals from the at least two different network nodes.

## Description

### TECHNICAL FIELD

This application relates to the field of positioning in a wireless communications system, and specifically, to a measurement and reporting method and an apparatus.

### BACKGROUND

With continuous development of communications technologies, communication between a terminal and a network node has become a common type of communication between devices. It becomes increasingly important for a network node to position a terminal or for a terminal to request a positioning service to implement a specific application. In new radio (new radio, NR) in fifth generation mobile communications (5th generation mobile networks or 5th generation wireless systems, 5G), beam-based wireless communication is used to improve efficiency of communication on a frequency spectrum with a higher frequency. Conventional positioning includes a plurality of positioning methods, for example, a positioning method based on an angle of departure (angle of departure, AOD), and a method based on a reference signal time difference (reference signal time different, RSTD). In all these positioning methods, a reference signal needs to be measured. For example, a base station sends a reference signal, and a terminal measures the reference signal sent by the base station, to obtain an angle of arrival or a reference signal time difference; or a base station measures a reference signal sent by a terminal.

In NR, signal sending or receiving is beam-based, and a beam may be implemented in a plurality of manners, for example, analog beamforming, digital beamforming, and hybrid beamforming. Different beams may be formed by using a same radio frequency link, or may be formed by using different radio frequency links. The foregoing factors affect positioning of a terminal.

### SUMMARY

Embodiments of this application provide a measurement and reporting method and an apparatus, to resolve a problem that when network nodes send a beam to a terminal, the terminal may not be able to simultaneously receive reference signals sent by the plurality of different network nodes due to different capabilities that is of the terminal and that is related to receive beams in a positioning system.

To resolve the foregoing problem, the following technical solutions are used in the embodiments of this application.

According to a first aspect, a measurement and reporting method is provided. The method is applied to a positioning system that includes at least one terminal and at least two network nodes, and includes: The terminal receives reference signals sent by the network nodes. The terminal measures the reference signals sent by the network nodes, and obtains measurement results. The terminal sends a measurement result report, where the measurement result report includes at least one group, the group includes the measurement results of the reference signals that can be simultaneously received by the terminal, and the measurement results are obtained by measuring the reference signals from the at least two different network nodes. In the foregoing technical solution, reference signals are measured to obtain reference signals that can be measured by a same receive beam of the terminal, where measurement results of the reference signals measured by the same receive beam of the terminal is grouped into one group, and reference signals in a same group are from different network nodes, so that a network node can obtain a capability of the terminal to simultaneously receive reference signals, to determine that the network nodes send the reference signals to the terminal by using a plurality of network nodes for determining a terminal location, thereby completing precise terminal positioning. In the foregoing method, resource overheads for sending reference signals by a network can be reduced, and positioning precision can be improved.

In a possible implementation of the first aspect, information about the reference signals includes: that the terminal can perform simultaneous receiving includes: simultaneously receiving the reference signals from the at least two different network nodes on a same receive beam of the terminal; simultaneously receiving the reference signals from the at least two different network nodes through a same panel of the terminal; or simultaneously receiving the reference signals from the at least two different network nodes through different panels of the terminal. In the foregoing technical solution, the terminal simultaneously receives information about the reference signals, so that the network nodes can determine a beam direction for sending the reference signals to the terminal, thereby solving a problem of large resource overheads because the network nodes need to send the reference signals to the terminal in a beam sweeping manner to implement terminal positioning.

In a possible implementation of the first aspect, the measurement results include beam qualities of the reference signals or a reference signal time difference.

In a possible implementation of the first aspect, the terminal performs layer 1 or layer 3 filtering on the measurement results, where the measurement results of the reference signals included in each group in the measurement result report are greater than or greater than or equal to a preset threshold. In the foregoing technical solution, a measurement value of reference signals measured by the terminal is filtered, so that a reference signal included in a group is a valid reference signal, thereby avoiding a case in which measurement results cannot be obtained because a measurement value of reference signals measured by the terminal is less than a threshold, and consequently, reference signals for positioning sent by the network nodes are invalid and terminal positioning measurement is impacted.

In a possible implementation of the first aspect, the terminal receives a positioning measurement configuration sent by the network nodes, where the positioning measurement configuration includes at least one of the following information: a maximum and/or minimum quantity of reference signals in each group, a maximum and/or minimum quantity of groups, a maximum and/or minimum quantity of reported reference signals, a corresponding maximum value that is of N and that is used when a same reference signal can be included in N groups, where N is a positive integer, and a threshold of each reference signal group or a threshold of each reported reference signal. In the foregoing technical solution, the terminal obtains, by using the positioning measurement configuration, a criterion for determining grouping and reporting, to process and report measurement results after reference signals are measured.

In a possible implementation of the first aspect, the terminal receives a positioning measurement indication sent by the network nodes, where the positioning measurement indication includes a reference signal grouping measurement indication and a positioning parameter measurement indication. In the foregoing technical solution, the terminal obtains different measurement results based on different positioning measurement indications, so that the network nodes can obtain required measurement results, thereby completing terminal positioning and reducing resource overheads.

According to a second aspect, a measurement and reporting method is provided. The method is applied to a positioning system that includes at least one terminal and at least two network nodes, and the method includes: The network nodes send reference signals to the terminal. The network nodes receive a measurement result report of the terminal, where the measurement result report includes at least one group, the group includes the measurement results of the reference signals that can be simultaneously received by the terminal, and the measurement results are obtained by measuring the reference signals from the at least two different network nodes. In the foregoing technical solution, reference signals that can be simultaneously received by a same receive beam or panel sent by the terminal are grouped, and the network nodes can obtain the reference signals that can be simultaneously received by the terminal, so that sending reference signals for positioning to the terminal in a beam sweeping manner is avoided, and resource overheads are reduced. In addition, the network nodes obtain sending directions of the reference signals by using group information, so that precise positioning can be implemented.

In a possible implementation of the second aspect, the measurement results of the reference signals that can be simultaneously received by the terminal includes results obtained after the reference signals from the at least two different network nodes are measured on a same receive beam of the terminal, results obtained after the reference signals from the at least two different network nodes are measured through a same panel of the terminal, or results obtained after the reference signals from the at least two different network nodes are measured through different panels of the terminal. In the foregoing technical solution, the terminal simultaneously receives information about the reference signals, so that the network nodes can determine a beam direction for sending the reference signals to the terminal, thereby solving a problem of large resource overheads because the network nodes need to send the reference signals to the terminal in a beam sweeping manner to implement terminal positioning.

In a possible implementation of the second aspect, the measurement results include beam qualities of the reference signals or a reference signal time difference.

In a possible implementation of the second aspect, the network nodes send a positioning measurement configuration to the terminal, where the positioning measurement configuration includes at least one of the following information: a maximum and/or minimum quantity of reference signals in each group, a maximum and/or minimum quantity of groups, a maximum and/or minimum quantity of reported reference signals, a corresponding maximum value that is of N and that is used when a same reference signal can be included in N groups, where N is a positive integer, and a threshold of each reference signal group or a threshold of each reported reference signal. In the foregoing technical solution, the terminal obtains, by using the positioning measurement configuration, a criterion for determining grouping and reporting, to process and report measurement results after reference signals are measured.

In a possible implementation of the second aspect, the network nodes send a positioning measurement indication to the terminal, where the positioning measurement indication includes a reference signal grouping measurement indication and a positioning parameter measurement indication. In the foregoing technical solution, the terminal obtains different measurement results based on different positioning measurement indications, so that the network nodes can obtain required measurement results, thereby completing terminal positioning and reducing resource overheads.

In a possible implementation of the second aspect, a network node sends a reference signal configuration request to a neighboring cell network node, where the reference signal configuration request includes a measurement result related to the neighboring cell network node in the measurement results of the terminal, and request the neighboring cell network node to configure a reference signal for the terminal for positioning. In the foregoing technical solution, information about the measurement results of the terminal is sent to the neighboring cell network node, so that the neighboring cell network node obtains capability information of a receive beam of the terminal and information about a direction of a beam that can be received, and then the neighboring cell network node can determine, based on the measurement results, to send resources of the reference signals for positioning, thereby avoiding sending reference signals for positioning to the terminal in a beam sweeping manner, saving network resources, and reducing overheads.

In a possible implementation of the second aspect, the network nodes receive a reference signal configuration response sent by the neighboring cell network node, where the reference signal configuration response includes at least one of the following information: a time-frequency resource of a reference signal, sequence configuration information, and a transmit window configuration. In the foregoing technical solution, a serving network node may obtain configuration information of a reference signal for positioning sent by a neighboring cell network node, so that the terminal can receive, by using a corresponding beam, the reference signal for positioning sent by the network node, thereby avoiding measuring reference signals by the terminal in a beam sweeping manner to implement positioning measurement, reducing overheads of the terminal, and saving energy.

According to another aspect of this application, a terminal is provided. The terminal is configured to implement a function related to the measurement and reporting method according to any possible implementation of the first aspect. The function may be implemented by hardware, or may be implemented by hardware executing corresponding software. The hardware or the software includes one or more units corresponding to the foregoing function.

In a possible implementation, a structure of the terminal includes a processor, and the processor is configured to support the user equipment in performing the measurement and reporting method according to any one of the first aspect or the possible implementations of the first aspect. Optionally, the terminal may further include a memory and a communications interface. The memory stores code and data. The memory is coupled to the processor. The communications interface is coupled to the processor or the memory.

According to another aspect of this application, a network node is provided. The network node is configured to implement a function related to the measurement and reporting method according to any one of the second aspect or the possible implementations of the second aspect. The function may be implemented by hardware, or may be implemented by hardware executing corresponding software. The hardware or the software includes one or more units corresponding to the foregoing function.

In a possible implementation, a structure of the network node includes a processor, and the processor is configured to support the network node in performing the function related to the measurement and reporting method according to any one of the second aspect or the possible implementations of the second aspect. Optionally, the network node may further include a memory and a communications interface. The memory stores code required for processing and/or by a baseband processor. The memory is coupled to the processor. The communications interface is coupled to the memory or the processor.

According to another aspect of this application, a computer-readable storage medium is provided. The computer-readable storage medium stores instructions. When the instructions are run on a computer, the computer is enabled to perform the measurement and reporting method according to any one of the first aspect or the possible implementations of the first aspect, or perform the measurement and reporting method according to any one of the second aspect or the possible implementations of the second aspect.

According to another aspect of this application, a computer program product including instructions is provided. When the computer program product runs on a computer, the computer is enabled to perform the measurement and reporting method according to any one of the first aspect or the possible implementations of the first aspect, or perform the measurement and reporting method according to any one of the second aspect or the possible implementations of the second aspect.

According to another aspect of this application, a communications system is provided. The communications system includes a plurality of devices, and the plurality of devices include a terminal and network nodes. The terminal is the terminal provided in the foregoing aspects, and is configured to support the terminal in performing the measurement and reporting method according to any one of the first aspect or the possible implementations of the first aspect; and/or the network nodes are the network nodes provided in the foregoing aspects, and are configured to support the network nodes in performing the measurement and reporting method according to any one of the second aspect or the possible implementations of the second aspect.

According to another aspect of this application, an apparatus is provided. The apparatus is a processor, an integrated circuit, or a chip, and is configured to perform steps performed by a processing unit of the terminal in the embodiments of this application, for example, measure received reference signals, and group the received reference signals based on reference signals that can be simultaneously received by a same receive beam or panel of a terminal, where measurement results of reference signals that are included in each group are obtained by using at least two different network nodes. The apparatus is further configured to perform processing or an action of the terminal that has been described in the foregoing aspects or embodiments. Details are not described herein again.

According to another aspect of this application, another apparatus is provided. The apparatus is a processor, an integrated circuit, or a chip, and is configured to perform steps performed by a processing unit of the network node in the embodiments of this application. The apparatus supports the network nodes in performing functions such as sending reference signals to the network node in the foregoing embodiments, receiving grouped measurement results from the terminal, sending the grouped measurement results to a neighboring cell network node, and receiving a reference signal configuration of the neighboring cell network node. The another apparatus is further configured to perform processing or an action of the network nodes that has been described in the foregoing aspects or embodiments. Details are not described herein again.

It may be understood that the apparatus, the computer storage medium, or the computer program product of the foregoing method for determining a measured value of a reference signal is configured to perform a corresponding method provided above. Therefore, for beneficial effects that can be achieved by the apparatus, the computer storage medium, or the computer program product, refer to the beneficial effects of the corresponding method provided above. Details are not described herein again.

### BRIEF DESCRIPTION OF DRAWINGS

FIG. 1 is a schematic diagram of a positioning system according to an embodiment of this application;
FIG. 2 shows a measurement and reporting method according to an embodiment of this application;
FIG. 3 shows a positioning measurement configuration method according to an embodiment of this application;
FIG. 4 is a flowchart of interaction between network nodes according to an embodiment of this application;
FIG. 5 is a schematic diagram of a possible structure of a terminal according to an embodiment of this application;
FIG. 6 is a schematic diagram of a possible logical structure of a terminal according to an embodiment of this application;
FIG. 7 is a schematic diagram of a possible structure of a network node according to an embodiment of this application; and
FIG. 8 is a schematic diagram of a possible logical structure of a network node according to an embodiment of this application.

### DESCRIPTION OF EMBODIMENTS

The following describes technical solutions in embodiments of this application with reference to the accompanying drawings in the embodiments of this application. Clearly, the described embodiments are merely some but not all of the embodiments of this application. All other embodiments obtained by a person skilled in the art based on the embodiments of this application without creative efforts shall fall within the protection scope of this application.

It should be understood that names of all nodes and messages in this application are merely names specified for ease of description in this application, and may be different names in an actual network. It should not be understood that names of various nodes and messages are limited in this application. On the contrary, any name that has a function the same as or similar to that of a node or a message used in this application is considered as a method or an equivalent replacement in this application, and falls within the protection scope of this application. Details are not described below.

In a 5G system, positioning is a specified goal in the release (release) 16 in NR, and improving positioning precision is a basic goal of 5G positioning.

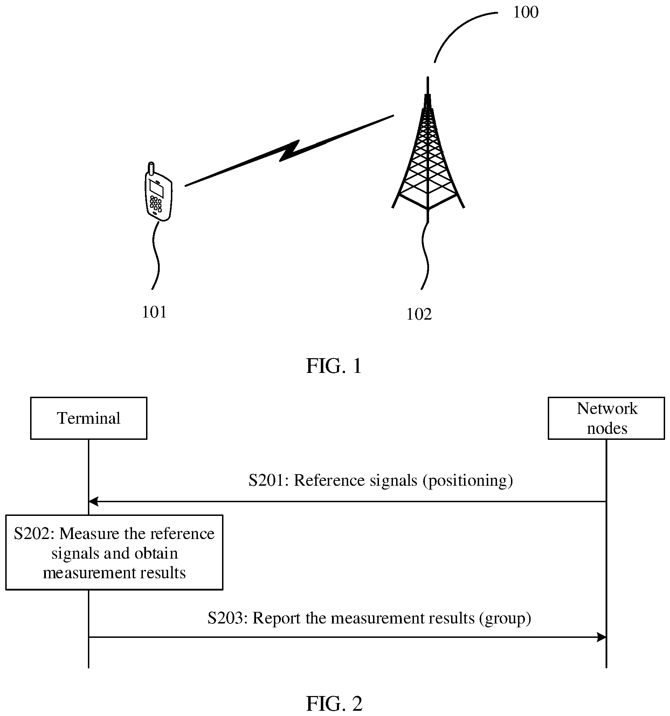

For a better understanding of a measurement and reporting method and an apparatus disclosed in the embodiments of this application, the following first describes a network architecture used in the embodiments of this application. FIG. 1 is a schematic structural diagram of a communications system to which an embodiment of this application is applicable.

It should be noted that the communications system mentioned in this embodiment of this application includes but is not limited to a narrowband internet of things (narrow band-internet of things, NB-IoT) system, a wireless local area network (wireless local access network, WLAN) system, a long term evolution (long term evolution, LTE) system, a next-generation 5G mobile communications system, or a communications system after 5G such as an NR system or a device to device (device to device, D2D) communications system.

As shown in FIG. 1, the network architecture may include one or more terminals 101 (and one terminal is shown in FIG. 1) and one or more network nodes 102 (and one network node is shown in FIG. 1). The terminal 101 and the network node 102 may form a beam-based multi-carrier communications system, for example, a 5G system.

Communication between the terminal 101 and the network node 102 includes uplink communication (that is, from the terminal 101 to the network node 102) and downlink communication (that is, from the network node 102 to the terminal 101). In the uplink communication, the terminal 101 is configured to send an uplink signal to the network node 102 on an uplink physical channel. The network node 102 is configured to receive the uplink signal sent by the terminal 101 on the uplink physical channel. Similarly, in the downlink communication, the network node 102 is configured to send a downlink signal to the terminal 101 on a downlink physical channel. The terminal 101 is configured to receive the downlink signal sent by the network node 102 on the downlink physical channel.

The uplink physical channel may include a random access channel (random access channel, RACH), a physical uplink control channel (physical uplink control channel, PUCCH), a physical uplink shared channel (physical uplink shared channel, PUSCH), and the like.

The uplink signal may include a sounding reference signal (sounding reference signal, SRS), a PUCCH demodulation reference signal (de-modulation reference signal, DMRS), a PUSCH DMRS, an uplink phase noise tracking signal (phase noise tracking reference signal, PTRS), and the like. The uplink signal may alternatively be a data signal. It should be understood that, in this application, unless otherwise specified, the uplink signal generally refers to various reference signals and data that are sent on the uplink physical channel.

The downlink physical channel may include a physical broadcast channel (physical broadcast channel, PBCH), a physical downlink control channel (physical downlink control channel, PDCCH), a physical downlink shared channel (physical downlink shared channel, PDSCH), and the like.

The downlink signal may include a primary synchronization signal (primary synchronization signal, PSS), a secondary synchronization signal (secondary synchronization signal, SSS), a PDCCH DMRS, a PDSCH DMRS, a downlink PTRS, a channel state information-reference signal (channel status information reference signal, CSI-RS), a cell reference signal (cell reference signal, CRS), a time-domain or frequency-domain tracking reference signal (tracking reference signal, TRS), a positioning reference signal (positioning reference signal, PRS), and the like. The downlink signal may alternatively be a data signal. It should be understood that, in this application, unless otherwise specified, the downlink signal generally refers to various reference signals and data that are sent on the downlink physical channel.

The terminal 101 may be user equipment (user equipment, UE), an access terminal, a UE unit, a UE station, a mobile station, a mobile console, a remote station, a remote terminal, a mobile device, a UE terminal, a terminal, a wireless communications device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal in a future 5G network, a terminal in a future evolved public land mobile network (public land mobile network, PLMN), or the like.

The network node 102 is a device that can communicate with the terminal 101, and may be a base station, a relay station, or an access point. The base station 102 includes but is not limited to an evolved NodeB (evolved node base, eNB), a radio network controller (radio network controller, RNC), a NodeB (node B, NB), a base station controller (base station controller, BSC), a base transceiver station (base transceiver station, BTS), a home base station (for example, a home evolved NodeB, or home NodeB, HNB), a baseband unit (baseband Unit, BBU), an eLTE (evolved LTE, eLTE) base station, and an NR base station (next generation node B, gNB), and may alternatively be a radio controller in a cloud radio access network (cloud radio access network, CRAN) scenario. In this application, the network node 102 may alternatively be a positioning management center or a distributed unit in a positioning management center. The distributed unit in the positioning management center may be physically integrated with a base station. A specific implementation is not limited in this application.

For ease of description, the following explains terms or concepts in the embodiments of this application.

A quasi-colocation (quasi-colocation, QCL) relationship is used to indicate that a plurality of resources have one or more same or similar communication features. For a plurality of resources that have a QCL relationship, a same or similar communications configuration may be used.

For example, if two antenna ports have a quasi-colocation relationship, a large-scale property of a channel used for one port to transmit a symbol may be inferred from a large-scale property of a channel used for the other port to transmit a symbol. The large-scale property may include a delay spread, an average delay, a Doppler spread, a Doppler frequency shift, an average gain, a receive parameter, a terminal receive beam number, a transmit/receive channel correlation, a receive angle of arrival (angle-of-arrival, AOA), a receiver antenna spatial correlation, a dominant AOA, an average AOA, an AOA spread, and the like.

Specifically, a QCL may be specified by using a quasi-colocation indication, and that the quasi-colocation indication is used to indicate whether at least two groups of antenna ports have a quasi-colocation relationship includes: The quasi-colocation indication is used to indicate whether SCI-RSs sent by the at least two groups of antenna ports are from a same transmission point or beam group. The network node may notify the terminal that there is a QCL relationship between ports for sending RSs, to help the terminal receive and demodulate the RSs. For example, the terminal can acknowledge that there is a QCL relationship between a port A and a port B. To be specific, a large-scale parameter that is of an RS measured over the port A may be used for measurement and demodulation of an RS over the port B.

A spatial (spatial) QCL is a type of QCL, and "spatial" may be understood from a perspective of a transmit end or a receive end. From the perspective of a transmit end, if two antenna ports have a spatial QCL relationship, beam directions corresponding to the two antenna ports are the same in space. From the perspective of a receive end, if two antenna ports have a spatial QCL relationship, the receive end can receive, in a same beam direction, signals sent over the two antenna ports.

A signal in wireless communication needs to be received and sent through an antenna, and a plurality of antenna elements (antenna element) may be integrated on one panel (panel) to form an antenna panel. One radio frequency (radio frequency, RF) link may drive one or more antenna elements. The terminal and the network node may each include one or more antenna panels, and each antenna panel may include one or more beams. The antenna panel may be represented as an antenna array (antenna array) or an antenna subarray (antenna subarray). One antenna panel may include one or more antenna arrays/subarrays. One antenna panel may be controlled by one or more oscillators (oscillator). The RF link may be referred to as a receive channel and/or a transmit channel, a receiver branch (receiver branch), or the like. One antenna panel may be driven by one RF link, or may be driven by a plurality of RF links.

A beam is a communications resource that may be a wide beam, a narrow beam, or a beam of another type. A technology for forming a beam may be a beamforming technology, or may be another technology. The beamforming technology may be a digital beamforming technology, an analog beamforming technology, or a hybrid beamforming technology. Different beams may be considered as different resources. The terminal and the network node may send same or different information by using different beams.

A plurality of beams that have same or similar communication features may be considered as one beam. One beam may include one or more antenna ports, used to transmit a data channel, a control channel, a sounding signal, and the like. For example, a transmit beam may refer to distribution of signal strength formed in different directions in space after a signal is transmitted through an antenna, and a receive beam may refer to distribution of signal strength, in different directions in space, of a radio signal received from an antenna.

One or more antenna ports forming a beam may be considered as one antenna port set. In a protocol, a beam may alternatively be embodied as a spatial filter (spatial filter). Beam information may be identified by using index information. The index information may correspond to an identifier of a resource configured for the terminal. For example, the index information may correspond to a configured CSI-RS identifier (identity, ID) or resource, or may correspond to a configured uplink SRS ID or resource. Alternatively, the index information may be index information explicitly or implicitly carried by using a signal or a channel carried on a beam. For example, the index information may be index information of a synchronization signal (synchronization signal, SS) sent on a beam or index information that is of the beam and that is indicated by a PBCH.

A beam information identifier may include an absolute beam index, a relative beam index, a logical beam index, an index of an antenna port corresponding to a beam, an index of an antenna port group corresponding to a beam, a time index of a downlink SS block, beam pair link (beam pair link, BPL) information or a beam pair link index, a transmit parameter (Tx parameter) or index corresponding to a beam, a receive parameter (Rx parameter) or index corresponding to a beam, a transmit weight (weight) or index corresponding to a beam, a weight matrix (weight vector), a weight vector (weight matrix), a receive weight corresponding to a beam, a transmit codebook (codebook) or index corresponding to a beam, a receive codebook or index corresponding to a beam, and the like.

A beam management resource includes a resource used for beam management, or may be embodied as a resource used for calculating and measuring a beam quality. The beam quality may include a layer 1 (layer 1, L1) reference signal received power (reference signal received power, RSRP), a L1 reference signal received quality (reference signal received quality, RSRQ), and the like. The beam management resource may include an SS, a PBCH, a downlink channel measurement reference signal (reference signal, RS), a tracking signal, a PDCCH DMRS, a PDSCH DMRS, an uplink channel SRS, an uplink random access signal, and the like. The beam quality is measured by using indicators such as an RSRP, a block error rate (block error rate, BLER), an RSRQ, a received signal strength indicator (received signal strength indicator, RSSI), a signal-to-noise ratio (signal to interference and noise ratio, SINR), a channel quality indicator (channel quality indicator, CQI), and a correlation.

In NR, the network node uses a TCI state (state) to notify the terminal of an association relationship between receive beams when the terminal receives an RS, for example, a relationship between a beam for receiving a CSI-RS or a synchronization signal block (synchronization signal block, SSB) and a beam for receiving a DMRS of a PDSCH. The network node may configure a TCI state table through radio resource control (radio resource control, RRC) higher layer signaling, and each TCI state table includes several TCI states. Each TCI state includes a TCI state ID, one or two QCL type indications, and an RS ID corresponding to each type indication. QCL types are as follows:
QCL-Type A: {Doppler frequency shift, Doppler spread, average delay, and delay spread};
QCL-Type B: {Doppler frequency shift and Doppler spread};
QCL-Type C: {Average delay and Doppler frequency shift}; and
QCL-Type D: {Spatial receive parameter}.

The QCL-type D represents the spatial QCL. When a receive beam needs to be indicated, the network node may indicate, by using higher layer signaling or control information (for example, a PDCCH), a TCI state that includes spatial QCL information. The terminal may read, based on the TCI state, an RS-ID corresponding to the QCL-type D, and then the terminal may perform receiving based on a currently maintained spatial receiving configuration (the receive beam) corresponding to the RS-ID. If a TCI state includes a spatial QCL indication (QCL-type D), an RS corresponding to the spatial QCL indication may be an SSB/PBCH block (block) or a periodic/semi-persistent CSI-RS.

Beam indications (TCI indications) of different downlink channels may have different locations. A PDCCH beam indication is associated with one or more TCI states by using higher layer signaling tci-StatesPDCCH configured by RRC. When a quantity of associated TCI states is greater than 1, one of the associated TCI states is selected by using media access control (media access control, MAC) control signaling (control element, CE) higher layer signaling. A PDSCH beam indication is indicated by a state associated with a TCI field in downlink control information (downlink control information, DCI) transmitted on a PDCCH. In an NR standard, a length of a TCI field included in DCI is three bits (corresponding to eight TCI states). When a quantity of TCI states included in RRC signaling is less than eight, an activated TCI state is directly mapped to the TCI field; otherwise, a maximum of eight mapped TCI states are indicated by using higher layer signaling. When the higher layer signaling indicates that no TCI field is present in the DCI, the terminal reuses a beam indication of a control channel to perform data channel receiving.

For uplink transmission, the spatial QCL relationship is not defined in NR, and an uplink beam indication is directly implemented by using an RS resource identifier. A PUCCH beam indication is indicated by using an RRC parameter PUCCH-Spatial-relation-info. The RRC parameter may include one or more RS resource identifiers. When a plurality of RS resource identifiers are included, the MAC CE selects one of the plurality of RS resource identifiers. Content of the PUCCH beam indication may be an identifier of an uplink or downlink RS resource, including an SSB index (index), a CSI-RS indicator (CSI-RS Resource Indicator, CRI), or an SRS index. A network node may suggest that the terminal perform uplink transmission by using a corresponding beam for receiving/sending the downlink/uplink RS resource. PUSCH beam information is configured by using an SRS index in DCI.

In LTE, for a current serving cell, the base station may configure the terminal to report reference signal resources that can be simultaneously measured, to help the base station transmit a plurality of reference signals. Because a reference signal, such as a cell-specific reference signal, in LTE, is transmitted by using a broadcast signal, any terminal in a specific coverage area can receive the reference signal. The terminal reports reference signals that can be measured, and the network can learn of the reference signals that can be simultaneously received by the terminal. Usually, the reference signals that can be measured by the terminal are in a relatively large angle domain. Therefore, the terminal can measure orthogonal or quasi-orthogonal reference signals from different network nodes or transmission nodes, to implement measurement.

However, in NR, because a beam is used, coverage is narrower than that of a conventionally used reference signal. A beam sent by the network can be received only when a receive beam of the terminal is at a specific angle or within a specific range. Because of beam sweeping, the receive end may receive beams from different directions at different time, but this does not mean that the receive end can simultaneously receive the beams from the different directions. This is a limitation to positioning measurement to some extent.

In addition, in NR, one base station may include a plurality of transmission reception points (transmission reception point, TRP). Therefore, there is a possibility that a plurality of TRPs perform downlink transmission for the terminal in different directions. A terminal may not have a capability of simultaneously receiving transmissions from a plurality of TRPs.

For positioning, there is a case in which a plurality of different base stations or cells send reference signals to a same terminal, and the reference signals of the different base stations or cells are from different directions. Consequently, whether the terminal can simultaneously receive beams from the different directions is a problem.

For example, in an observed time difference of arrival (Observed Time Difference Of Arrival, OTDOA) positioning technology, a user needs to measure positioning reference signals from a plurality of cells or network nodes (for example, TRPs), and calculate a time difference between the reference signals. To receive reference signals, the user needs to receive reference signals from different base stations in different directions by using a receive beam. Selection of the receive beam is determined through a beam training process. Selection of a specific receive beam depends on a location of the terminal relative to the base station, a channel propagation environment, and the like.

To receive the reference signals from the different base stations, the terminal may need to perform receiving on a plurality of receive beams in different directions at a same moment. However, as described above, because of a limited capability of a terminal, a quantity of receive beams in different directions that can be simultaneously generated by the terminal is limited. In this case, UE may not be able to perform simultaneous receiving for a combination of some base stations, so that RSTD measurement and calculation are affected, thereby affecting positioning performance and a positioning success rate.

It can be learned that when an existing measurement mechanism is used in NR or a beam-based transmission technology, the terminal cannot be supported in reporting whether information about reference signals from different cells or base stations can be simultaneously received for beams or cells. Consequently, the network node may not know reference signals that can be simultaneously received by the terminal.

In addition, due to a channel multipath effect, for a same transmit beam sent by a same base station, the user may receive signals from different propagation paths by using different receive beams, causing a vague TOA estimation and affecting RSTD calculation and positioning precision.

Therefore, in a beam-based positioning method in NR, the foregoing problem has to be resolved, so that not only a reference signal receiving and sending problem can be resolved, but also positioning precision can be further improved.

To resolve the foregoing problem, an embodiment provides a measurement and reporting method. The method is applied to a positioning system that includes at least one terminal and at least two network nodes, and includes: The terminal receives reference signals sent by the network nodes. The terminal measures the reference signals sent by the network nodes, and obtains measurement results. The terminal sends a measurement result report, where the measurement result report includes at least one group, the group includes the measurement results of the reference signals that can be simultaneously received by the terminal, and the measurement results are obtained by measuring the reference signals from the at least two different network nodes.

That the terminal can perform simultaneous receiving includes: simultaneously receiving the reference signals from the at least two different network nodes on a same receive beam of the terminal; simultaneously receiving the reference signals from the at least two different network nodes through a same panel of the terminal; or simultaneously receiving the reference signals from the at least two different network nodes through different panels of the terminal.

The measurement results include beam qualities of the reference signals or a reference signal time difference.

The terminal performs layer 1 or layer 3 filtering on the measurement results, where the measurement results of the reference signals included in each group in the measurement result report are greater than or greater than or equal to a preset threshold.

FIG. 2 shows a measurement and reporting method according to an embodiment of this application, and the method includes the following steps:
S201: A terminal receives reference signals sent by network nodes.

The reference signals in this application include a reference signal that may be used for positioning measurement and that includes but is not limited to a CSI-RS, a tracking reference signal (tracking reference signal, TRS), a synchronization signal block (synchronization signal block, SSB), a DMRS, and a positioning reference signal (positioning reference signal, PRS).

The network nodes may include a plurality of network nodes, and may be different TRPs belonging to a same base station, for example, remote radio units (remote radio unit, RRU) of different distributed units (distribution unit, DU); or may be TRPs of different base stations. Therefore, the reference signals in this application may be from different TRPs of a same base station, or may be from different base stations.

It should be understood that, for a serving base station of the terminal, a reference signal may be a terminal-specific reference signal. The terminal-specific reference signal is a reference signal, for example, a positioning reference signal, a CSI-RS, or a DMRS, configured for the terminal by using signaling. However, for a non-serving base station, because the terminal does not establish a connection with the base station, there is no beam training process between the terminal and the non-serving base station. Therefore, a reference signal of the non-serving base station is usually measured by using a common reference signal, where the common reference signal includes an SSB, a cell-specific reference signal, and the like. The SSB is usually also referred to as an SSB/PBCH, and a PBCH (physical broadcast channel, PBCH) is short for a physical broadcast channel.

The foregoing method does not have a limitation that a dedicated reference signal such as a positioning reference signal cannot be configured for the non-serving base station. Configuration information of the reference signal of the non-serving base station may be obtained through interaction between the serving base station and the non-serving base station, and is sent to the terminal by using the serving base station, so that the terminal can train a beam between the terminal and the non-serving base station.

S202: The terminal measures the reference signals, and obtains measurement results.

Different terminals may have different capabilities. Some terminals may support reception by using only one beam, some terminals may support simultaneous reception by using a plurality of beams on a same panel, and some terminals support a plurality of panels, where each panel supports at least one beam. It should be understood that a beam that can be supported by the terminal includes a beam generated through analog beamforming, digital beamforming, or hybrid beamforming.

The foregoing panel is a set of ports having independent radio frequency channels. One panel may have one or more radio frequency channels, and one radio frequency channel may correspond to one independent beam. Interference between radio frequency channels on different panels is relatively low.

When measuring the reference signals, the terminal may select, based on a training result, one receive beam for measuring the reference signals, or may determine a corresponding receive beam based on related information configured by the base station, to measure the reference signals. For example, the base station may configure spatial QCL information for the reference signals. It should be noted that a corresponding RS in the spatial QCL information may be a reference signal of a serving cell, or may be a reference signal of a neighboring cell. A cell to which the reference signal belongs may be indicated by using a serving cell identifier (serving cell index, SCI) or a physical cell identifier (physical cell index, PCI).

Specifically, the QCL information of the reference signals may be indicated by using a PDCCH, or may be configured by using higher layer signaling such as RRC. For example, resources or a resource set of the reference signals may be preconfigured by using RRC signaling, and the resources of the reference signals are indicated by using a reference signal index. A specific configuration method is not limited in this application.

The terminal measures the reference signals sent by the network nodes, and obtains the measurement results. The obtained measurement results include beam qualities of the reference signals or a reference signal time difference (reference signal time difference, RSTD). The beam quality may be one of a reference signal received power (reference signal received power, RSRP), a reference signal received quality (reference signal receiving quality, RSRQ), or a signal to interference plus noise ratio (signal to interference plus noise ratio, SINR). A specific measurement result depends on a configuration of the network nodes or a protocol definition, and this is not limited in this application.

It should be understood that a physical layer measurement result may be obtained in the foregoing measurement process, and not all physical layer measurement results may satisfy a requirement on reporting. Therefore, layer 1 or layer 3 filtering further needs to be performed. A measurement result that satisfies a specific condition may be obtained through the layer 1 or layer 3 filtering. In other words, the layer 1 or layer 3 filtering can be successfully performed only when a receive beam quality satisfies a specific threshold. Therefore, the terminal performs the layer 1 or layer 3 filtering on the measurement results, where measurement results of reference signals included in a measurement result report are greater than or greater than or equal to a preset threshold.

Because the reference signals may be from different TRPs or base stations, and the terminal may use different receive beams for different reference signals, a layer 1 or layer 3 filter may be configured based on a receive beam. Beam qualities of reference signals received on a same beam are filtered by using a same threshold; or beam qualities of reference signals received through a same panel are filtered by using a same threshold.

S203: The terminal sends the measurement result report.

The measurement result report includes at least one group, the group includes the measurement results of the reference signals that can be simultaneously received by the terminal, and the measurement results are obtained by measuring the reference signals from the at least two different network nodes.

To help the network nodes process the measurement results, or to help the network nodes learn of a beam receiving capability of the terminal, the terminal needs to perform measurement result grouping when sending the measurement result report. Through grouping, the network nodes may learn of reference signals received on a same receive beam or a beam receiving capability of the terminal.

The beam receiving capability of the terminal includes a capability of the terminal to simultaneously receive beams by using a same receive beam, and the same receive beam includes a receive beam with a spatial QCL relationship. The beam receiving capability of the terminal further includes a capability of the terminal to receive beams by using a same panel, that is, a capability of receiving beams by the terminal by using a same panel. If one panel supports a plurality of beams, a beam receiving capability of one panel may further include a receiving capability of each beam.

That the terminal can perform simultaneous receiving includes: simultaneously receiving the reference signals from the at least two different network nodes on a same receive beam of the terminal; simultaneously receiving the reference signals from the at least two different network nodes through a same panel of the terminal; or simultaneously receiving the reference signals from the at least two different network nodes through different panels of the terminal.

Based on different receiving capabilities, the grouping varies when the terminal performs measurement result reporting.

Therefore, when the terminal performs measurement result grouping, grouping rules include:
(a) Reference signals received by using a same beam are grouped into one group, and reference signals belonging to different groups are received by using different beams. That reference signals in different groups are received by using different beams includes that reference signals in different groups may be the same. For example, in a multipath case, a same reference signal may be received on different receive beams. The reference signals include reference signals from a same TRP or different TRPs or from a same cell or different cells. This is the same in the following, and details are not described again.
(b) Reference signals received by using a same panel are grouped into one group. In this case, reference signals belonging to different groups cannot be received by using a same panel.
(c) Reference signals received simultaneously by using a plurality of receive beams or a plurality of panels are grouped into one group. In this case, a plurality of beams or panels of the terminal need to have a capability of performing simultaneous receiving by using a plurality of beams. In other words, the terminal can perform simultaneous receiving by using a plurality of beams, and the plurality of beams may belong to a same panel or different panels. In this case, reference signals belonging to different groups cannot be received by using a plurality of receive beams or a plurality of panels. It should be understood that if there is one beam or panel, a grouping rule is the foregoing case (a) or (b), and details are not described again.
   For a case in which a plurality of reference signals can be simultaneously received by using a plurality of receive beams, that the terminal may receive a plurality of reference signals by using different receive beams further includes: A difference between time of arrival of the different reference signals at the terminal is greater than a time window T, where T is a slot, a subframe, or another time unit. This is not limited in this application. T may be a time window determined by the terminal, time that is required for beam switching and that is indicated in reporting of a capability of the terminal, time that is required for beam switching and that is determined based on implementation of the terminal, time configured on a network side, or time agreed in a protocol.
(d) Reference signals that cannot be simultaneously received by using a same receive beam or panel are grouped into one group. In other words, reference signals belonging to different groups can be simultaneously received by using a same receive beam or panel.

The foregoing grouping is specifically embodied as logical classification, that is, different reference signals are classified by using different identifiers, and reference signals having a same identifier are used as one group. For example, in reported content, an identifier of an uplink and/or downlink reference signal corresponding to a receive beam, a received signal time difference (or a time difference range), a panel of a receive beam, and the like may be explicitly used for identification.

For a grouping rule based on a receive panel, grouping may be performed based on receiving by using a same receive beam on a same panel or different receive beams on a same panel, and grouping is performed according to the foregoing rule. In the foregoing grouping, to ensure that reference signals can be simultaneously received by using a same beam or panel, the following is specifically included:
(1) A beam quality (for example, an RSRP, an RSRQ, or an SINR) of a reference signal received by using a receive beam or panel is greater than a threshold. A measurement quantity by using the threshold and a threshold corresponding to the measurement quantity may be directly configured by the base station, or may be defined in a protocol. The measurement quantity is a quantity of measured reference signals, and includes: a time-domain measurement quantity, a frequency-domain measurement quantity, a space-domain measurement quantity, an RSRP, an RSRQ, and an SINR. A measurement result includes but is not limited to an arrival time, a timing advance, a round trip time (round trip time), a reference signal time difference, a Doppler spread, a Doppler frequency shift, a phase noise level, a horizontal or vertical angle of arrival (or an angle of arrival difference), a horizontal or vertical angle of departure (an angle of departure difference), an RSRP, an RSRQ, and an SINR.
   If a reference signal can be simultaneously received by using a plurality of receive beams or panels, and a reference signal received by each receive beam or panel satisfies a threshold, the terminal may select a receive beam or panel corresponding to an optimal measurement value of the reference signal for grouping. Alternatively, the terminal may independently determine a group corresponding to a receive beam or panel on which the reference signal is located. Alternatively, a reference signal may be included in groups corresponding to the plurality of receive beams or panels.
(2) For each reference signal, a receive beam or panel with an optimal beam quality is selected, and a measurement quantity corresponding to the beam quality is configured by the network node or defined in a protocol. The optimal beam quality means that when a plurality of receive beams or panels receive a same reference signal, there is a largest measurement value in a measurement result of a measurement quantity, and the largest measurement value may be a negative number.
(3) The terminal selects, based on a configuration of the network node or a protocol agreement, K reference signals each with an optimal beam quality, where K is an integer greater than 0. It should be understood that, in selection of an optimal beam quality, the selected K reference signals are not limited by the foregoing beam quality threshold.
   Similarly, if a reference signal can be simultaneously received by using a plurality of receive beams or panels, the terminal may select, for each receive beam or panel, a reference signal with an optimal beam quality. Reference signals selected for different receive beams or panels may be the same.
(4) The terminal independently determines whether a reference signal can be received by using a receive beam or panel. If the terminal independently determines whether a reference signal can be received by using a receive beam or panel, this specifically depends on implementation of the terminal, and is not limited in this application.

The simultaneous receiving includes receiving by the terminal in a same slot, a same subframe, a same symbol, or a same specified time period. This is the same in the following, and details are not described again.

The terminal may receive, based on a protocol agreement or a positioning measurement configuration sent by the network nodes, at least one of the following parameters: a maximum and/or minimum quantity of reference signals in each group, a maximum and/or minimum quantity of groups, a maximum and/or minimum quantity of reported reference signals, and a corresponding maximum value that is of N and that is used when a same reference signal can be included in N groups, where N is a positive integer.

The positioning measurement configuration is configured by the network nodes for the terminal. A specific process is described in the following embodiments, and details are not described herein.

In a possible implementation, the foregoing parameters may also be directly associated with a capability of the terminal. For example, a maximum quantity of groups that cannot be simultaneously received is equal to a quantity of receive beams on each panel of the terminal, and a maximum quantity of groups that can be simultaneously received is equal to a quantity of panels of the terminal. However, if the terminal can support simultaneous receiving performed by using a plurality of beams on a same panel, this is specified in reporting of the capability. To be specific, capability reporting information of the terminal includes the quantity of panels of the terminal and a quantity of beams for simultaneous receiving and supported by each panel.

If the terminal can support simultaneous receiving performed by using a plurality of beams on a same panel, a configuration or an indication is further required, unless it is defined in a protocol that one panel corresponds to one group. Specifically, the network node indicates, by using RRC signaling, a PDCCH, or a positioning message, whether a group of reported measurement results is based on a panel or a beam. A specific signaling format depends on a protocol definition, and is not limited in this application.

In a possible implementation, it is defined in a protocol that all groups are based on a receive beam, and information about the foregoing panel is implicit in the groups. Specifically, all measurement results are reported based on a same receive beam. In this case, only a beam-based group needs to be supported in a measurement result report. Specific reference signal measurement results are distinguished based on beam identifiers or simple index-based grouping. The index-based grouping includes that a measurement result of each reference signal is associated with one index, or one index is associated with measurement results of a plurality of reference signals. The index may be an integer. A specific manner of reporting the measurement results is not limited in this application.

A specific measurement result report includes one or more of a reference signal resource index, cell information, a measurement quantity, a measurement result, reference information, and auxiliary information.

The reference signal resource index may be an index, an identifier, or a reference signal name of an uplink reference signal or a downlink reference signal (including a synchronization signal).

The cell information may be a physical cell identifier, a cell identifier, a serving cell index, a cell global identifier, or the like.

The measurement quantity and the measurement result are as follows: The measurement quantity may be a time-domain measurement quantity, a frequency-domain measurement quantity, a space-domain measurement quantity, an RSRP, an RSRQ, or an SINR. The measurement result includes but is not limited to an arrival time, a timing advance, a round trip time (round trip time), a reference signal time difference, a Doppler spread, a Doppler frequency shift, a phase noise level, a horizontal or vertical angle of arrival (or an angle of arrival difference), a horizontal or vertical angle of departure (an angle of departure difference), an RSRP, an RSRQ, and an SINR.

The auxiliary information includes a grouping rule identifier, used to indicate a measurement rule that the measurement quantity or a reference signal (resource grouping) complies with. Specifically, the grouping rule identifier includes but is not limited to the following application scenarios:

The grouping rule identifier is used to identify a reference signal. For example, a reference signal index includes, for example, {CSI-RS resource #1, CSI-RS resource #2}, and the auxiliary information may indicate that the two reference signals can be received on a same receive beam. It should be understood that a CSI-RS is merely used as an example herein, and this is not limited to a CSI-RS. This is the same in the following, and details are not described again.

The grouping rule identifier is used to indicate the measurement quantity or the measurement result. For example, a user may report RSRP measurement results {CSI-RS resource #1, RSRP 1; CSI-RS resource #2, RSRP 2}, and inform, by using an auxiliary information identifier, the base station that these measurement results are obtained through measurement by using a same beam or panel.

The grouping rule identifier is used to indicate an attribute of the measurement quantity. A reference signal time difference (RSTD) is used as an example, and a cell-level RSTD is used as an example. The RSTD is obtained by calculating a difference between arrival time of a reference cell reference signal and a measured cell reference signal. A group identifier may be used to indicate that one or more measurement results of a reference cell (reference cell) (or a reference signal) and a measured cell (measured cell) (or a measurement reference signal) that are used for an RSTD are obtained through measurement by using one beam, one panel, or different beams.

The auxiliary information may further include QCL information.

The QCL information is used to indicate a QCL relationship between one or more measurement results or reference signals. For example, the QCL information may be used to inform the base station that there is a quasi-colocation relationship between one or more reference signals in measurement on a terminal side. For example, a same receive beam is used for receiving (QCL type D), or a specific synchronization relationship is satisfied in time domain and in frequency domain (QCL type A). Alternatively, measurement resources corresponding to one or more measurement results have a quasi-colocation relationship. A reference signal indicated by the QCL type D may be a reference signal configured by the base station for the terminal, or may be a synchronization signal block obtained through blind detection by the terminal. In this case, the terminal needs to report information such as an index, a frequency, and a PCI of the synchronization signal block.

The auxiliary information may further include information about a channel propagation path. The information about a channel propagation path is used to indicate information about a propagation path of one or more measurement results, for example, a path index (a specific measurement path), a path delay, and a path signal quality (an RSRP, an SINR, and the like).

The auxiliary information may further include receive beam and panel information. The receive beam and panel information is used to indicate a receive panel or a receive beam used for measurement results. Indication may be performed by using a panel ID, an SRS resource set ID, a CSI-RS resource ID, or the like.

The auxiliary information may further include strong interference indication information or mute information. The strong interference indication information is used to indicate that there is relatively strong interference between some reference signals or cells. The user may also suggest the mute information to the base station. For example, when interference is relatively strong (for example, an RSRP or an SINR satisfies a specific condition), the user reports, to the base station, information about an interfering reference resource or cell, information about an interfered reference signal resource or cell, and an interference intensity (for example, an SINR).

The auxiliary information may further include receiving failure event information. The receiving failure event information is used to indicate a cause for a measurement failure of some reference signals or cells. The cause includes but is not limited to a beam conflict because of which the terminal cannot simultaneously receive two signals; interference because of which the terminal cannot perform correct detection; or the like.

In a possible implementation, one or more groups in the foregoing measurement result report may further include one SRS resource index, and the index indicates an SRS reference signal resource configured by a serving cell. A transmit beam of an SRS corresponds to a receive beam of each group. In a wireless environment with reciprocity, each group includes one SRS, so that a network can obtain a correspondence between a downlink reference signal and an SRS sent by a terminal, and uplink TDOA measurement can be performed by using an uplink SRS. Therefore, the foregoing group-based solution may further be specifically used by the network node to determine a network node configured to receive the SRS sent by the terminal and a corresponding receive beam.

Specifically, if the network node measures the SRS sent by the terminal, after receiving the measurement result report sent by the terminal, the network node performs configuration on the SRS sent by the terminal, and the configuration includes at least one of a time window for sending the SRS by the terminal, a quantity of sending times, a transmit power, and a transmit beam.

It should be understood that those in steps S201 to S203 are not necessarily direct results for positioning measurement. The foregoing embodiments may have different functions in different implementations.

In a possible implementation, measurement and reporting of a reference signal in the foregoing embodiments are performed by measuring an SSB or a cell-specific reference signal. In the foregoing process, the terminal determines reference signals that can be simultaneously received by using one beam or panel, and reports measurement results to the network node. The network node may learn, based on information about grouping of the measurement results reported by the terminal, of reference signals that can be received on a receive beam of the terminal, so that in a subsequent positioning measurement process, the network node sends a positioning reference signal based on the receive beam of the terminal, and the positioning reference signal sent by the network node is measured, to obtain a positioning measurement parameter. In addition, a positioning measurement result is sent to the network, thereby completing terminal positioning.

In a possible implementation, the embodiment shown in FIG. 2 may alternatively be directly used for positioning measurement. To be specific, the network node may send a positioning reference signal to the terminal after obtaining, through another step similar to a step in the embodiment 2, information about reference signals that can be simultaneously received on a receive beam of the terminal. In this case, the measurement and reported result in the embodiment 2 includes a positioning measurement result. For example, the positioning measurement result is an RSTD.

In a possible implementation, if the terminal supports simultaneously receiving reference signals by using a plurality of receive beams, the plurality of receive beams may operate in different bandwidth parts (bandwidth part, BWP), and different waveform parameters include at least one of the following parameters: a subcarrier spacing, a length of a cyclic prefix (cyclic prefix, CP), a BWP identifier, a transmission time interval (transmission time interval, TTI), and a location and a bandwidth (location and bandwidth). In this case, different receive beams operate in different BWPs.

According to the foregoing embodiment, the network node can receive information about a receive beam corresponding to reference signals that can be obtained by the terminal, or specify a relationship between measurement results, so that the network node (for example, a positioning management center) can determine a location of the terminal based on a measurement result. By using a correspondence between a receive beam and a reference signal, the network node can send a positioning reference signal more accurately, thereby avoiding a resource waste and improving a positioning speed. In addition, the network node is prevented from performing positioning calculation by using reference signals of different receive beams, thereby improving positioning precision.

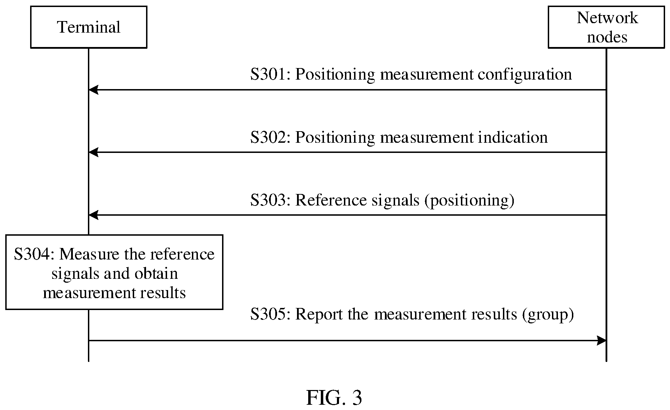

FIG. 3 shows a positioning measurement configuration method according to an embodiment of this application. Steps are as follows:
S301: Network nodes send a positioning measurement configuration to a terminal.

Specifically, the positioning measurement configuration includes at least one of the following information: a maximum and/or minimum quantity of reference signals in each group, a maximum and/or minimum quantity of groups, a maximum and/or minimum quantity of reported reference signals, a corresponding maximum value that is of N and that is used when a same reference signal can be included in N groups, where N is a positive integer, and a threshold of each reference signal group or a threshold of each reported reference signal.

The positioning measurement configuration may further include at least one of a measurement quantity and a measurement quantity index. When the measurement quantity is indicated by using the measurement quantity index, a correspondence between the measurement quantity and the measurement quantity index needs to be specified in the positioning measurement configuration.

The positioning measurement configuration may further include a QCL relationship between the reference signals, or a specified reference signal group. Reference signals in a same group are received by using a same receive beam or panel. If the positioning measurement configuration includes reference signal grouping, when performing measurement, the terminal receives one group of reference signals by using a same receive beam or panel; and when performing measurement reporting, the terminal groups measurement results based on the reference signal grouping in the positioning measurement configuration.

When reference signals in a same group in the positioning measurement configuration are received by using a same panel, the reference signals may be received by using one beam of the same panel, or may be received by using different beams of the same panel. If one panel supports only one receive beam, receiving may be performed in a time division manner. In other words, there is a time window T between different reference signals, as described above. Details are not described again.

If one panel supports a plurality of receive beams, reference signals from different directions may be simultaneously received. The network nodes may obtain a relationship between a reference signal and a receive beam in a pre-measurement manner. For a specific method, refer to the method used to obtain a correspondence between the receive beam and the simultaneously received reference signals in FIG. 2. Details are not described again.

It should be understood that a meaning of the measurement report is the same as that of the measurement reporting in this application, and usage is not distinguished in this application. This is the same in the following, and details are not described again.

S302: The network nodes send a positioning measurement indication to the terminal.

The positioning measurement indication is used to indicate the terminal to perform positioning measurement. Specifically, the positioning measurement indication may include a reference signal grouping measurement indication and a positioning parameter measurement indication.

The reference signal grouping measurement indication is used by the network nodes to indicate the terminal to measure the reference signals and perform grouping and reporting based on the measurement. The positioning parameter measurement indication is used by the network nodes to indicate the terminal to perform positioning parameter measurement. A positioning parameter includes but is not limited to an RSTD, a Doppler spread, a Doppler frequency shift, a phase noise level, a horizontal or vertical angle of arrival, and the like.

As described above, before the terminal performs positioning measurement, a network needs to obtain reference signals that can be measured by a same receive beam or panel of the terminal. In addition, the measured reference signals are grouped based on the beam or panel, and measurement results are reported based on the grouping. After obtaining the grouped measurement results, the network nodes may send a reference signal to the terminal for positioning measurement. It should be understood that the reference signals in this application may include the foregoing various reference signals, and details are not described again. The reference signal grouping measurement indication may be used by the network nodes to indicate the terminal to measure the reference signals and perform grouping and reporting.

Similarly, as described above, if the network nodes have obtained the reference signals that can be measured by using a same receive beam or panel of the terminal, that is, have obtained information about reference signal grouping, the network nodes may indicate and inform, by using the positioning parameter measurement indication, the terminal to perform positioning parameter measurement, and group and report the measurement results.

It can be learned from the foregoing embodiments that both measurement and grouping of the reference signals and reporting of a positioning parameter measurement result require reporting of the measurement results, and a difference lies in that reported results are different. If the network needs to obtain the reference signals that can be measured by using a same receive beam or panel of the terminal, the group includes a measurement value of the reference signal measurement quantity. If the positioning parameter measurement is performed, the measurement results include the positioning parameter measurement result, such as an RSTD, a Doppler spread, a Doppler frequency shift, a phase noise level, a horizontal or vertical angle of arrival. Details are not described again.

It should be understood that the foregoing layer 1 or layer 3 filtering makes sense only when the positioning measurement indication is the reference signal grouping measurement indication, that is, the layer 1 or layer 3 filtering is valid only in reference signal measurement and grouping. When the positioning measurement indication is the positioning parameter measurement, the layer 1 or layer 3 filtering is not performed to filter the positioning parameter measurement result.

Steps S303 to S305 are the same as steps S201 to S203 shown in FIG. 2, and details are not described again.

In the foregoing embodiments, the network nodes perform positioning measurement configuration on the terminal, so that the terminal can obtain a reference signal measurement parameter, thereby providing a basis for grouping the measurement results.

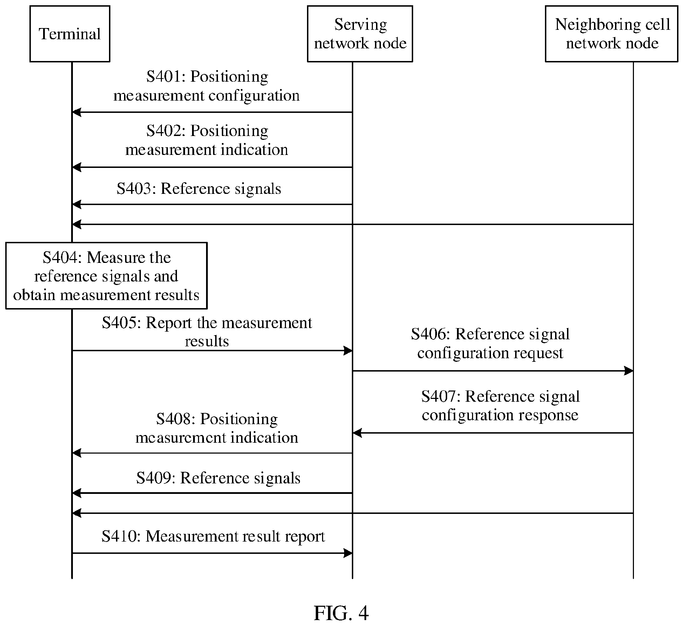

FIG. 4 is a flowchart of interaction between network nodes according to an embodiment of this application. In FIG. 4, there may be a plurality of neighboring cell network nodes. A serving network node and the neighboring cell network node are the network nodes in the foregoing embodiments. For ease of description, in this embodiment of this application, network nodes are classified into a serving network node and a neighboring cell network node. The serving network node is a network node, such as a serving base station, that establishes a connection to a terminal, and the neighboring cell network node is a network node, such as a neighboring cell base station, that is neighboring to the serving network node and that may provide a positioning service for the terminal.

The embodiment shown in FIG. 4 includes the following steps.

Steps S401 to S405 are the same as steps S301 to S305, and details are not described again. It should be noted that in S402, the positioning measurement indication is the reference signal grouping measurement indication, and is used by the network nodes to indicate the terminal to measure the reference signals and perform, based on the measurement, grouping and reporting.

Usually, in S403, the reference signals sent by the serving network node and the neighboring cell network node are SSBs or cell-specific reference signals. Because a coverage area of the SSBs or the cell-specific reference signals is relatively large, the network nodes cannot obtain more accurate beam information only by grouping reference signals that can be received by a receive beam.

For example, a positioning reference signal can cover a smaller area, but for SSB-based grouping, sending of the positioning reference signal may cause a failure of the terminal to receive the positioning reference signal. Therefore, a more accurate positioning method is needed to perform positioning measurement based on the foregoing grouping. More accurate positioning measurement requires that the network nodes select a narrower beam during positioning measurement, and notify the terminal of related configuration information. However, completing a reference signal configuration of the neighboring cell network node depends on the interaction between the serving network node and the neighboring cell network node.

In a possible implementation, in a measurement result report, each group of measurement results includes both a measurement value of a reference signal measurement quantity and a positioning measurement result. The positioning measurement result is described above, and details are not described again. It should be understood that the positioning measurement result in this case is relatively inaccurate, and is used only by the serving network node to roughly estimate a location of the terminal.

After receiving the measurement result report sent by the terminal, the serving network node may approximately determine the location of the terminal based on information about grouping of the measurement results. To further improve positioning precision, the serving network node needs to send a measurement result related to the neighboring cell network node in the measurement result report of the terminal to the neighboring cell network node. After obtaining the measurement result, the neighboring cell network node learns of an SSB range in which the terminal is located, so that a more accurate reference signal can be configured for the terminal for positioning measurement.

S406: The serving network node sends a reference signal configuration request to the neighboring cell network node.

The reference signal configuration request includes the measurement result related to the neighboring cell network node in the measurement results of the terminal, and the serving network node requests the neighboring cell network node to configure a reference signal for the terminal for positioning.

After receiving the reference signal configuration request sent by the serving network node, the neighboring cell network node prepares a reference signal resource for positioning measurement of the terminal, where the reference signal resource includes a time-frequency resource of a reference signal, sequence configuration information, a transmit window configuration, and the like. The transmit window configuration is used to indicate a length of a time window in which a reference signal is sent, and the reference signal may be sent periodically, may be sent continuously, or may be sent discontinuously. A specific sending manner is not limited in this application.

S407: The neighboring cell network node sends a reference signal configuration response to the serving network node.

After completing the reference signal configuration, the neighboring cell network node sends the reference signal configuration response to the serving network node. The reference signal configuration response includes configuration information of the reference signal, for example, a time-frequency resource of the reference signal, sequence configuration information, and a transmit window configuration.

It should be understood that, in the foregoing steps, the serving network node and the neighboring cell network node may alternatively be sent by a positioning service center. For example, the terminal sends the measurement result report to the positioning service center, and the positioning service center requests the reference signal configuration information from the neighboring cell network node (for example, a neighboring cell base station), and sends the reference signal configuration to the terminal by using a serving base station. Therefore, the serving network node and the neighboring cell network node in this embodiment of this application are not limited to only base stations, and may include various positioning network elements such as the serving base station, the neighboring cell base station, and the positioning service center.

S408: The serving network node sends a positioning measurement indication to the terminal.

After receiving the reference signal configuration response of the neighboring cell network node, the serving network node sends reference signal configurations of each neighboring cell network node and the serving network node to the terminal, and indicates the terminal to perform positioning measurement. The positioning measurement indication in S408 is a positioning measurement indication, and is used to indicate the terminal to report a positioning measurement parameter through measurement.

It should be understood that the reference signal configuration and the positioning measurement indication that are used for positioning measurement and that are configured by the serving network node for the terminal may be sent to the terminal by using same signaling, for example, RRC signaling, or may be sent to the terminal by using different signaling. In FIG. 4, only one piece of signaling is used for representation, but using different signaling for transmission is not limited. The transmission signaling includes RRC signaling, a MAC CE, or a PDCCH. A specific type of signaling to be used is not limited in this application.

In a possible implementation, the network node may configure one or more uplink reference signals for the terminal based on the measurement result report of the terminal. A transmit beam and power control information of the uplink reference signal are associated with a positioning measurement grouping result reported by the terminal. The network node may indicate the terminal to use a receive beam for a group as a receive beam or a transmit beam of one or more subsequent reference signals, or to calculate a path loss and an uplink transmit power by using a downlink reference signal in a group.

For example, the measurement result report sent by the terminal in S405 includes P (where P is an integer greater than or equal to 1) groups, and a k^{th} group in the P groups includes Qk (where Qk is an integer greater than or equal to 1) reference signals or Qk pieces of reference signal index information. The network node may associate the one or more downlink reference signals with the k^{th} group or one reference signal in the k^{th} group, and the terminal should receive the associated downlink reference signal by using a corresponding beam for receiving the k^{th} group. If the terminal simultaneously receives the k^{th} group by using a plurality of beams in S403, the terminal should receive the associated downlink reference signal by using the plurality of beams.

The network node may associate one or more uplink reference signals with the k^{th} group or a reference signal in the k^{th} group in the measurement result report of the terminal in S405. The terminal should send the uplink reference signal by using a transmit beam corresponding to the corresponding beam for receiving the k^{th} group. If the terminal simultaneously receives the k^{th} group by using a plurality of beams in S403, the terminal should send the associated downlink reference signal simultaneously or in a time-division manner by using a plurality of beams. A sending manner is configured by the network node or determined based on a terminal capability. The network node may indicate the terminal to calculate a path loss by using a reference signal in the k^{th} group, and determine a transmit power of the associated uplink reference signal.

In a possible implementation, an uplink reference signal resource in this embodiment may be implicitly associated with a group of the positioning measurement result reported by the terminal. The network node may configure a specific quantity of uplink reference signal resources used for positioning for the terminal. After the terminal reports grouping of the measurement results in S405, the terminal device directly associates an uplink reference signal resource configured by the network node with a group reported by the terminal. For example, the network node may configure L uplink reference signal resources for the terminal. The terminal device may report no more than L groups, and directly and sequentially associate reported groups with the uplink reference signals. If a quantity of reported groups is less than L, a transmit beam of a redundant uplink reference signal is determined by the terminal.

It should be understood that the receive beam and the transmit beam in this embodiment may be replaced with a receive panel and a transmit panel. Details are not described again.

S409: The serving network node and the neighboring cell network node send reference signals to the terminal.

The reference signals sent by the serving network node and the neighboring cell network node may be the same as or different from sent reference signals in S403. If in step S407, the neighboring cell network node configures a reference signal for the terminal, the reference signal sent by the neighboring cell network node is the configured reference signal. It should be understood that the serving network node, as described above, may also configure a reference signal for the terminal.

In a possible implementation, to improve positioning precision, a reference signal with narrower coverage may be used as a reference signal for positioning. In the foregoing steps, an SSB may be used for grouping reference signals, and the SSB may be a relatively wide beam. Therefore, during positioning measurement, a narrower beam may be used to improve positioning measurement precision. However, because a wide beam and a narrow beam differ in area coverage, a beam sweeping manner needs to be used to perform positioning measurement in a coverage area of the wide beam. Beam sweeping may be that the network node sends a reference signal in a beam sweeping manner, or may be that the terminal performs receiving in a beam sweeping manner.

To maintain uniformity of positioning measurement, it may be defined in a protocol that whether sending is performed by the terminal in a beam-based manner or by the network node in a beam sweeping manner, or a signaling configuration manner is used for indication. If the network configuration is used, it needs to be specified in positioning measurement indication signaling whether the network node performs sending through beam sweeping or the terminal performs receiving in a beam sweeping manner.

Whether the network performs beam sweeping or the terminal performs beam sweeping depends on the network configuration. Different sweeping manners used in different scenarios have different effects. For example, when the network needs to perform simultaneous positioning measurement on a plurality of terminals, sweeping performed by the network may be used to save more network resources. If measurement is performed for a single terminal, sweeping performed by the terminal may be used to improve resource efficiency.

To ensure that a terminal can measure a reference signal at a specific location in the network, a reference signal sent by the network node needs to be coordinated because the network node does not know an exact location of the terminal, to ensure that the terminal can measure the reference signal sent by the network node. In a possible implementation, the network node sends the reference signal within a specific time window, and sweeps, in a beam sweeping manner, a coverage area of a reference signal in a reference signal group. For example, the network node sweeps a coverage area of a wide beam (such as an SSB) by using a narrow beam (such as a PRS), for example, sweeps a coverage area of one wide beam by using three narrow beams. The terminal receives, in a configured time window, reference signals by using a receive beam corresponding to a wide beam in the foregoing measurement result report.

S410: The terminal sends the measurement result report to the serving network node.

In S410, the measurement result report sent by the terminal includes the positioning measurement result. The positioning measurement result is described above, and details are not described again.

According to the foregoing embodiment, the network node may configure an appropriate reference signal for the terminal to implement positioning measurement, thereby greatly reducing overheads of sending the positioning reference signal, and improving system resource utilization.

The foregoing mainly describes the solutions provided in the embodiments of this application from a perspective of interaction between network elements. It may be understood that, to implement the foregoing functions, the network elements, such as the terminal and the network node, include corresponding hardware structures and/or software modules for performing the functions. A person skilled in the art should be easily aware that, in combination with the examples described in the embodiments disclosed in this specification, network elements and algorithm steps may be implemented by using hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the terminal and the network node may be divided into functional modules according to the foregoing method examples. For example, division into each functional module may be performed, or two or more functions may be integrated into one processing module. The integrated module may be implemented in a form of hardware, or may be implemented in a form of a software function module. It should be noted that in the embodiments of this application, division into the modules is an example and is merely logical function division, and may be other division during actual implementation. It should also be understood that the functional modules of the terminal in this application do not include all functional modules of the terminal, but only include functional modules related to this application. The network node may be a base station, a positioning server, or a positioning management function, and the base station may be a serving base station and/or a neighboring cell base station.

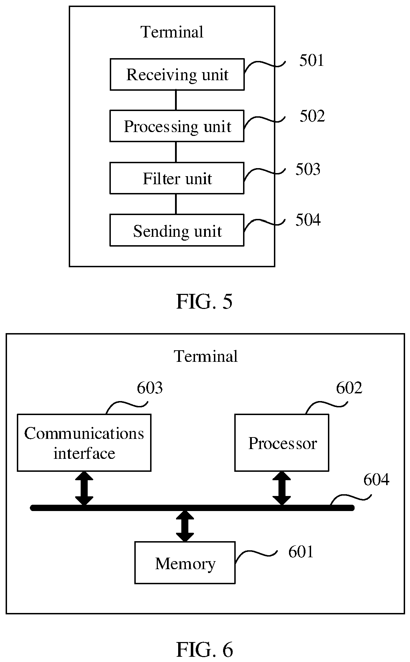

FIG. 5 is a schematic diagram of a possible structure of a terminal that is related to the foregoing embodiments and that is provided in this application. The terminal includes a receiving unit 501, a processing unit 502, and a sending unit 504. The receiving unit 501 is configured to support the terminal in performing S201 in FIG. 2, S301, S302, and S303 in FIG. 3, and S401, S402, S403, S408, and S409 in FIG. 4. The processing unit 502 is configured to support the terminal in performing processing of measuring the reference signals and obtaining the measurement results in S202 in FIG. 2, or processing of measuring reference signals and obtaining measurement results in S304 in FIG. 3, or processing of measuring reference signals and obtaining measurement results in S404 in FIG. 4. The sending unit 504 is configured to support a first node in performing S203 in FIG. 2, S305 in FIG. 3, and S405 and S410 in FIG. 4.

The terminal may further include a filter unit 503, configured to support the terminal in performing layer 1 or layer 3 filtering in the embodiment in FIG. 2, FIG. 3, or FIG. 4, to obtain the measurement result report.

In hardware implementation, the receiving unit 501 may be a receiver, the sending unit 504 may be a transmitter, and the receiver and the transmitter are integrated into a communications unit to form a communications interface.

FIG. 6 is a schematic diagram of a possible logical structure of a terminal that is related to the foregoing embodiments and that is provided in an embodiment of this application. The terminal includes a processor 602. In this embodiment of this application, the processor 602 is configured to control and manage an action of the terminal. For example, the processor 602 is configured to support the terminal in performing S202 in FIG. 2, S304 in FIG. 3, and S404 in FIG. 4 in the foregoing embodiments. Optionally, the terminal may further include a memory 601 and a communications interface 603. The processor 602, the communications interface 603, and the memory 601 may be connected to each other or connected to each other through a bus 604. The communications interface 603 is configured to support the terminal in performing communication, and the memory 601 is configured to store program code and data of the terminal. The processor 602 invokes the code stored in the memory 601 to perform control and management. The memory 601 may be coupled to or not coupled to the processor.

The processor 602 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 6, but this does not mean that there is only one bus or only one type of bus.

The processor 602, the memory 601, and the communications interface 603 may alternatively be integrated into an application-specific integrated circuit, for example, a processing chip, or a processing circuit. The communications interface 603 may be a communications interface that includes wireless receiving and sending, or may be an interface for a digital signal input after a received radio signal is processed by another processing circuit.

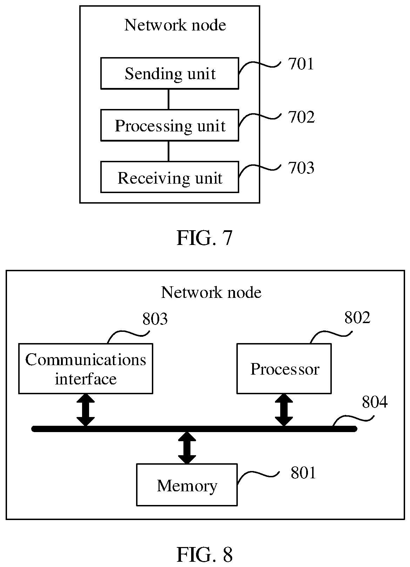

FIG. 7 is a schematic diagram of a possible structure of a network node that is related to the foregoing embodiments and that is provided in this application. In this application, the network node is a base station, a positioning server, or a positioning management function. The base station includes a serving base station and/or a neighboring cell base station, or the network node includes a serving network node and a neighboring cell network node. The network node includes a sending unit 701 and a receiving unit 703. The sending unit 701 is configured to support the network node in performing S201 in FIG. 2, S301, S302, and S303 in FIG. 3, and S401, S402, S403, S406, S408 and S409 in FIG. 4. The receiving unit 703 is configured to support the network node in performing S203 in FIG. 2, S305 in FIG. 3, and S405, S407, and S4010 in FIG. 4.

The network node may further include a processing unit 702, configured to support the network node in performing processing on a received message, reference signal generation, measurement configuration parameter determining, reference signal sending window determining, and the like that are performed by the network node in the foregoing method embodiments.

In hardware implementation, the sending unit 701 may be a transmitter, the receiving unit 703 may be a receiver, and the receiver and the transmitter are integrated into a communications unit to form a communications interface.

FIG. 8 is a schematic diagram of a possible logical structure of a network node that is related to the foregoing embodiments and that is provided in an embodiment of this application. The network node includes a processor 802. In this embodiment of this application, the processor 802 is configured to control and manage an action of the network node. For example, the processor 802 is configured to support the network node in performing processing on various messages performed by the receiving unit 703, the sending unit 701, and the processing unit 702 in the foregoing embodiments, and measurement configuration parameter determining and positioning parameter determining. Optionally, the network node may further include a memory 801 and a communications interface 803. The processor 802, the communications interface 803, and the memory 801 may be connected to each other or connected to each other through a bus 804. The communications interface 803 is configured to support the network node in performing communication, and the memory 801 is configured to store program code and data of the network node. The processor 802 invokes the code stored in the memory 801 to perform control and management. The memory 801 may be coupled to or not coupled to the processor.

The processor 802 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

The processor 802, the memory 801, and the communications interface 803 may alternatively be integrated into an application-specific integrated circuit, for example, a processing chip, or a processing circuit. The communications interface 803 may be a communications interface that includes wireless receiving and sending, or may be an interface for a digital signal input after a received radio signal is processed by another processing circuit.

In another embodiment of this application, a readable storage medium is further provided. The readable storage medium stores computer-executable instructions. When a device (which may be a single-chip microcomputer, a chip, or the like) or a processor performs steps that are performed by the terminal or the network node and that are in the method for determining a reference signal measurement result group in FIG. 2, FIG. 3, or FIG. 4, the computer-executable instructions in the readable storage medium are read. The foregoing readable storage medium may include any medium that can store program code, such as a USB flash drive, a removable hard disk, a read-only memory, a random access memory, a magnetic disk, or an optical disc.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium, and the at least one processor executes the computer-executable instructions, so that the device implements the steps that are performed by the terminal and the network node and that are in the method for determining a reference signal measurement result group provided in FIG. 2 to FIG. 4.

In another embodiment of this application, a communications system is further provided. The communications system includes at least one terminal and one network node. The network node includes a base station, a positioning server, or a positioning management function. The terminal may be the terminal provided in FIG. 5 or FIG. 6, and is configured to perform the steps performed by the terminal in the method for determining a reference signal measurement result group provided in FIG. 2 to FIG. 4; and/or the network node may be the network node provided in FIG. 7 or FIG. 8, and is configured to perform the steps performed by the network node in the method for determining a reference signal measurement result group provided in FIG. 2 to FIG. 4. It should be understood that the communications system may include a plurality of terminals and a plurality of network nodes. The terminal may simultaneously measure reference signals sent by the plurality of network nodes, and determine a reference signal group, so that the terminal measures reference signals sent by one or more network nodes, determines a measurement result of a reference signal that can be measured by a same receive beam or panel of the terminal, and reports a measurement result group.

In this embodiment of this application, the terminal receives reference signals sent by one or more network nodes, measures the reference signals, and obtains a reference signal group. The group includes measurement results of the reference signals that can be simultaneously received by the terminal, and the measurement results are obtained by measuring reference signals from at least two different network nodes. According to the foregoing method, a capability of the terminal to simultaneously receive reference signals can be obtained, so that the network nodes send, based on a capability of the terminal to simultaneously measure reference signals, reference signals to the terminal in a targeted manner, thereby improving efficiency of sending reference signals.

It should be finally noted that the foregoing descriptions are merely specific implementations of this application. However, the protection scope of this application is not limited thereto. Any variation or replacement within the technical scope disclosed in this application shall fall within the protection scope of this application. Therefore, the protection scope of this application shall be subject to the protection scope of the claims.

## Claims

1. A measurement and reporting method, wherein the method is applied to a positioning system, the positioning system comprises at least one terminal and at least two network nodes, and the method comprises:
receiving, by the terminal, reference signals sent by the network nodes;
measuring, by the terminal, the reference signals sent by the network nodes, and obtaining a measurement result; and
sending, by the terminal, a measurement result report, wherein the measurement result report comprises at least one group, the group comprises the measurement results of the reference signals that can be simultaneously received by the terminal, and the measurement results are obtained by measuring the reference signals from the at least two different network nodes.

2. The method according to claim 1, wherein that the terminal can perform simultaneous receiving comprises:
simultaneously receiving the reference signals from the at least two different network nodes on a same receive beam of the terminal;
simultaneously receiving the reference signals from the at least two different network nodes through a same panel of the terminal; or
simultaneously receiving the reference signals from the at least two different network nodes through different panels of the terminal.

3. The method according to claim 1 or 2, the measurement results comprise:
beam qualities of the reference signals or a reference signal time difference.

4. The method according to any one of claims 1 to 3, comprising:
performing, by the terminal, layer 1 or layer 3 filtering on the measurement results, wherein the measurement results of the reference signals comprised in each group in the measurement result report are greater than or equal to a preset threshold.

5. The method according to any one of claims 1 to 4, comprising:
receiving, by the terminal, a positioning measurement configuration sent by the network node, wherein the positioning measurement configuration comprises at least one of the following information: a maximum and/or minimum quantity of reference signals in each group, a maximum and/or minimum quantity of groups, a maximum and/or minimum quantity of reported reference signals, a corresponding maximum value that is of N and that is used when a same reference signal can be comprised in N groups, wherein N is a positive integer, and a threshold of each reference signal group or a threshold of each reported reference signal.

6. The method according to any one of claims 1 to 5, comprising:
receiving, by the terminal, a positioning measurement indication sent by the network node, wherein the positioning measurement indication comprises a reference signal grouping measurement indication and a positioning parameter measurement indication.

7. A measurement and reporting method, wherein the method is applied to a positioning system, the positioning system comprises at least one terminal and at least two network nodes, and the method comprises:
sending, by the network nodes, reference signals to the terminal; and
receiving, by the network nodes, a measurement result report of the terminal, wherein the measurement result report comprises at least one group, the group comprises measurement results of the reference signals that can be simultaneously received by the terminal, and the measurement results are obtained by measuring the reference signals from the at least two different network nodes.

8. The method according to claim 7, wherein the measurement results of the reference signals that can be simultaneously received by the terminal comprise:
results obtained after the reference signals from the at least two different network nodes are measured on a same receive beam of the terminal;
results obtained after the reference signals from the at least two different network nodes are measured through a same panel of the terminal; or
results obtained after the reference signals from the at least two different network nodes are measured through different panels of the terminal.

9. The method according to claim 7 or 8, the measurement results comprise:
beam qualities of the reference signals or a reference signal time difference.

10. The method according to any one of claims 7 to 9, comprising:
sending, by the network nodes, a positioning measurement configuration to the terminal, wherein the positioning measurement configuration comprises at least one of the following information: a maximum and/or minimum quantity of reference signals in each group, a maximum and/or minimum quantity of groups, a maximum and/or minimum quantity of reported reference signals, a corresponding maximum value that is of N and that is used when a same reference signal can be comprised in N groups, wherein N is a positive integer, and a threshold of each reference signal group or a threshold of each reported reference signal.

11. The method according to any one of claims 7 to 10, comprising:
sending, by the network node, a positioning measurement indication to the terminal, wherein the positioning measurement indication comprises a reference signal grouping measurement indication and a positioning parameter measurement indication.

12. The method according to any one of claims 7 to 11, comprising:
sending, by the network nodes, a reference signal configuration request to a neighboring cell network node, wherein the reference signal configuration request comprises a measurement result related to the neighboring cell network node in the measurement results of the terminal, and requesting the neighboring cell network node to configure a reference signal for the terminal for positioning.

13. The method according to claim 12, comprising:
receiving, by the network nodes, a reference signal configuration response sent by the neighboring cell network node, wherein the reference signal configuration response comprises at least one of the following information: a time-frequency resource of a reference signal, sequence configuration information, and a transmit window configuration.

14. A terminal, wherein the terminal is used in a positioning system, the positioning system comprises at least one terminal and at least two network nodes, and the terminal comprises:
a receiving unit, configured to receive reference signals sent by the network nodes;
a processing unit, configured to: measure the reference signals sent by the network nodes, and obtain a measurement result; and
a sending unit, configured to send a measurement result report to the network nodes, wherein the measurement result report comprises at least one group, the group comprises the measurement results of the reference signals that can be simultaneously received by the terminal, and the measurement results are obtained by measuring the reference signals from the at least two different network nodes.

15. The terminal according to claim 14, wherein that the terminal can perform simultaneous receiving comprises:
simultaneously receiving the reference signals from the at least two different network nodes on a same receive beam of the terminal;
simultaneously receiving the reference signals from the at least two different network nodes through a same panel of the terminal; or
simultaneously receiving the reference signals from the at least two different network nodes through different panels of the terminal.

16. The terminal according to claim 14 or 15, wherein the measurement results comprise:
beam qualities of the reference signals or a reference signal time difference.

17. The terminal according to any one of claims 14 to 16, comprising:
a filter unit, configured to perform layer 1 or layer 3 filtering on the measurement results, wherein the measurement results of the reference signals comprised in each group in the measurement result report are greater than or greater than or equal to a preset threshold.

18. The terminal according to any one of claims 14 to 17, comprising:
the receiving unit, further configured to receive a positioning measurement configuration sent by the network nodes, wherein the positioning measurement configuration comprises at least one of the following information: a maximum and/or minimum quantity of reference signals in each group, a maximum and/or minimum quantity of groups, a maximum and/or minimum quantity of reported reference signals, a corresponding maximum value that is of N and that is used when a same reference signal can be comprised in N groups, wherein N is a positive integer, and a threshold of each reference signal group or a threshold of each reported reference signal.

19. The terminal according to any one of claims 14 to 18, comprising:
the receiving unit, further configured to receive a positioning measurement indication sent by the network nodes, wherein the positioning measurement indication comprises a reference signal grouping measurement indication and a positioning parameter measurement indication.

20. A network node, wherein the network node is used in a positioning system, the positioning system comprises at least one terminal and at least two network nodes, and the network node comprises:
a sending unit, configured to send reference signals to the terminal; and
a receiving unit, configured to receive a measurement result report of the terminal, wherein the measurement result report comprises at least one group, the group comprises measurement results of the reference signals that can be simultaneously received by the terminal, and the measurement results are obtained by measuring the reference signals from the at least two different network nodes.

21. The network node according to claim 20, wherein the measurement results of the reference signals that can be simultaneously received by the terminal comprises:
results obtained after the reference signals from the at least two different network nodes are measured on a same receive beam of the terminal;
results obtained after the reference signals from the at least two different network nodes are measured through a same panel of the terminal; or
results obtained after the reference signals from the at least two different network nodes are measured through different panels of the terminal.

22. The network node according to claim 20 or 21, wherein the measurement results comprise:
beam qualities of the reference signals or a reference signal time difference.

23. The network node according to any one of claims 20 to 22, comprising:
the sending unit, further configured to send a positioning measurement configuration to the terminal, wherein the positioning measurement configuration comprises at least one of the following information: a maximum and/or minimum quantity of reference signals in each group, a maximum and/or minimum quantity of groups, a maximum and/or minimum quantity of reported reference signals, a corresponding maximum value that is of N and that is used when a same reference signal can be comprised in N groups, wherein N is a positive integer, and a threshold of each reference signal group or a threshold of each reported reference signal.

24. The network node according to any one of claims 20 to 23, comprising:
the sending unit, further configured to send a positioning measurement indication to the terminal, wherein the positioning measurement indication comprises a reference signal grouping measurement indication and a positioning parameter measurement indication.

25. The network node according to any one of claims 20 to 24, comprising:
the sending unit, further configured to: send a reference signal configuration request to a neighboring cell network node, wherein the reference signal configuration request comprises a measurement result related to the neighboring cell network node in the measurement results of the terminal, and request the neighboring cell network node to configure a reference signal for the terminal for positioning.

26. The network node according to claim 25, comprising:
the receiving unit, further configured to receive a reference signal configuration response sent by the neighboring cell network node, wherein the reference signal configuration response comprises at least one of the following information: a time-frequency resource of a reference signal, sequence configuration information, and a transmit window configuration.

27. A terminal, comprising:
hardware related to program instructions, wherein the hardware is configured to perform steps of the method according to any one of claims 1 to 6.

28. A network device, comprising:
hardware related to program instructions, wherein the hardware is configured to perform steps of the method according to any one of claims 7 to 13.

29. A readable storage medium, wherein the readable storage medium stores a program, and when the program is run, the communications method according to any one of claims 1 to 13 is performed.
